# EUROPÄISCHE PATENTSCHRIFT

(11) **EP 2 609 979 B1**
(45) Veröffentlichungstag und Bekanntmachung des Hinweises auf die Patenterteilung: **09.08.2017**
(21) Anmeldenummer: 12198853.9
(22) Anmeldetag: 21.12.2012
(51) Int. Cl.: B01D 46/00, B01D 46/42

(54) **Kurbelgehäuseentlüftungsvorrichtung**
Crankcase ventilation device
Dispositif de dégazage du carter de vilebrequin

(30) Priorität: 02.01.2012 DE 102012200015
(43) Veröffentlichungstag der Anmeldung: 03.07.2013
(73) Patentinhaber: MAHLE International GmbH, 70376 Stuttgart (DE)
(72) Erfinder: Sauter, Hartmut, 71272 Renningen (DE); Schwalk, Bernhard, 71634 Ludwigsburg (DE)
(74) Vertreter: BRP Renaud & Partner mbB Rechtsanwälte Patentanwälte Steuerberater

(56) Entgegenhaltungen:
- WO-A1-2009/025927
- WO-A1-2011/060413
- WO-A2-2007/135082
- DE-A1-102010 027 787
- DE-A1-102010 029 322
- DE-U1-202007 013 145

## Beschreibung

Die vorliegende Erfindung betrifft eine Kurbelgehäuseentlüftungsvorrichtung für eine Brennkraftmaschine, insbesondere eines Kraftfahrzeugs, mit den Merkmalen des Oberbegriffs des Anspruchs 1.

Aus der WO 2009/080492 A2 ist eine Kurbelgehäuseentlüftungsvorrichtung für eine Brennkraftmaschine bekannt, die ein Gehäuse mit einem Einlassanschluss zum Zuführen von zu reinigendem Blow-by-Gas und einen Auslassanschluss zum Abführen von gereinigtem Blow-by-Gas umfasst. Im Gehäuse ist ein Filterelement angeordnet, das im Gehäuse einen mit dem Einlassanschluss fluidisch verbundenen Rohraum von einem mit dem Auslassanschluss fluidisch verbundenen Reinraum trennt. Ferner ist ein Bypassventil vorgesehen, das im Gehäuse angeordnet ist, das einen im Gehäuse verlaufenden, den Rohraum mit dem Reinraum fluidisch verbindenden Bypasspfad steuert und das einen Ventilsitz sowie ein mittels Federkraft gegen den Ventilsitz vorgespanntes Ventilglied aufweist, das ab einem vorbestimmten rohseitigen Überdruck entgegen der Federkraft vom Ventilsitz abhebt und den Bypasspfad öffnet. Des Weiteren ist ein Impaktor vorgesehen, der im Gehäuse, und zwar im Bypasspfad so angeordnet ist, dass eine Prallwand des Impaktors nur bei geöffnetem Bypasspfad von einem rohseitigen Blow-by-Gasstrom angeströmt ist. Bei der bekannten Kurbelgehäuseentlüftungsvorrichtung sind das Ventilglied und der Ventilsitz am Filterelement angeordnet. Ferner ist bei der bekannten Vorrichtung vorgesehen, die Prallwand des Impaktors und somit den gesamten Impaktor ebenfalls am Filterelement anzuordnen, wodurch das Filterelement eine hohe Funktionsdichte aufweist. Bei einem Wechsel des Filterelements, beispielsweise im Rahmen eines Wartungsintervalls, kommt es dann zwangsläufig auch zu einem Wechsel des Bypassventils und des Impaktors, was mit entsprechend hohen Kosten verbunden ist.

Eine gattungsgemäße Kurbelgehäuseentlüftungsvorrichtung ist aus der WO 2011/060413 A1 bekannt und utnerscheidet sich von der vorstehend vorgestellten Kurbelgehäuseentlüftungsvorrichtung dadruch, dass das Ventilglied am Gehäuse relativ zum Ventilsitz hubverstellbar angeordnet ist und über eine Feder am Gehäuse abgestützt.

Die vorliegende Erfindung beschäftigt sich mit dem Problem, für eine Kurbelgehäuseentlüftungsvorrichtung der eingangs genannten Art eine verbesserte oder zumindest eine andere Ausführungsform anzugeben, die sich insbesondere durch eine vergleichsweise preiswerte Realisierbarkeit auszeichnet, wobei außerdem eine preiswerte Wartung angestrebt ist.

Dieses Problem wird bei der vorliegenden Erfindung insbesondere durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, das Ventilglied am Gehäuse hubverstellbar anzuordnen und den Ventilsitz am Filterelement auszubilden. Hierdurch kann bei einem Wechsel des Filterelements das Ventilglied am Gehäuse verbleiben, so dass mit dem Wechsel des Filterelements nur der Ventilsitz des Bypassventils erneuert wird. Der Ventilsitz ist jedoch besonders preiswert am Filterelement realisierbar, so dass durch den Wechsel des Filterelements keine erhöhten Kosten zu erwarten sind. Somit lässt sich die Wartung der Kurbelgehäuseentlüftungsvorrichtung besonders preiswert realisieren. Des Weiteren lassen sich auch die Kosten zur Herstellung des Bypassventils reduzieren, da der Ventilsitz unmittelbar am Filterelement realisiert werden kann, ohne dass dabei nennenswerte Mehrkosten entstehen.

Erfindungsgemäß ist am Gehäuse ein separater Ventilgliedhalter befestigt, an dem das Ventilglied relativ zum Ventilsitz hubverstellbar angeordnet ist. Mit Hilfe eines derartigen Ventilgliedhalters lässt sich das Bypassventil, abgesehen vom Ventilsitz als vormontierbare Einheit realisieren, die besonders einfach in das Gehäuse eingebaut werden kann.

Zur Realisierung der Federkraft, die das Ventilglied gegen den Ventilsitz antreibt bzw. vorspannt, kann das Bypassventil mit wenigstens einer Vorspannfeder ausgestattet sein, die beispielsweise als Schraubendruckfeder ausgestaltet sein kann. Die Vorspannfeder ist dabei zweckmäßig ebenfalls gehäuseseitig angeordnet, so dass auch die Vorspannfeder bei einem Wechsel des Filterelements im Gehäuse verbleibt.

Bei einer anderen vorteilhaften Ausführungsform kann die Prallwand des Impaktors ebenfalls gehäuseseitig angeordnet sein. Erfindungsgemäß ist die Prallwand am vorstehend genannten Ventilgliedhalter ausgebildet. Auf diese Weise wird der Impaktor zusammen mit dem Bypassventil in einer gemeinsamen Baugruppe realisiert, die vormontierbar ist und einfach am Gehäuse angebracht werden kann.

Zweckmäßig kann die Prallwand ringförmig bzw. zylindrisch ausgestaltet sein, wobei die Prallwand das Ventilglied im Bereich des Ventilsitzes koaxial zum Ventilsitz umschließt. Insbesondere für den Fall, dass das Ventilglied einen Ventilteller aufweist, der mit dem Ventilsitz zusammenwirkt, ergibt sich eine ringförmige Austrittsöffnung für das rohseitige Blow-by-Gas, wenn das Ventilglied vom Ventilsitz abhebt. Durch diese ringförmige Austrittsöffnung tritt das rohseitige Blow-by-Gas bezüglich einer Längsmittelachse des Ventilsitzes radial aus. Die ringförmige Prallwand ist nun so positioniert, dass diese radiale Blow-by-Gasströmung radial, also frontal auf die Prallwand trifft, wodurch diese den gewünschten Impaktoreffekt zeigen kann. Die Längsmittelachse des Ventilsitzes erstreckt sich dabei zweckmäßig koaxial zu einer Längsmittelachse des hubverstellbaren Ventilglieds.

Bei einer anderen vorteilhaften Ausführungsform, bei welcher das Ventilglied als Tellerventil ausgestaltet ist und einen Ventilteller sowie einen Ventilschaft aufweist, kann das Bypassventil eine mit dem Ventilschaft zusammenwirkende Führung aufweisen. Hierdurch wird eine zuverlässige Funktionalität für die Hubverstellung des Ventilglieds relativ zum Ventilsitz erzielt. Besonders vorteilhaft ist dabei eine Weiterbildung, bei welcher diese Führung am vorstehend genannten Ventilgliedhalter ausgebildet ist. Somit kann dem Ventilgliedhalter eine weitere Funktion hinzugefügt werden, was dessen Funktionsdichte erhöht.

Bei einer anderen vorteilhaften Ausführungsform kann eine Positionssensorik zum Erzeugen eines Positionssignals in Abhängigkeit der Ventilstellung vorgesehen sein. Beispielsweise kann mit Hilfe der Positionssensorik ein Öffnen des Bypassventils erkannt werden und entsprechend ausgewertet werden. Üblicherweise öffnet das Bypassventil erst dann, wenn ein unzulässig hoher Differenzdruck zwischen Rohraum und Reinraum entsteht. Häufige Ursache für einen derartigen unzulässigen Differenzdruck ist eine Verunreinigung des Filterelements, die den Durchströmungswiderstand des Filterelements erhöht. Abhängig vom Positionssignal kann somit beispielsweise ein Warnsignal oder ein Wartungssignal generiert werden, um anzuzeigen, dass eine Wartung der Kurbelgehäuseentlüftungsvorrichtung bzw. ein Wechsel des Filterelements erforderlich erscheint.

Entsprechend einer zweckmäßigen Weiterbildung kann die Positionssensorik einen ortsfest am Gehäuse angeordneten Positionssensor und einen ortsfest am Ventilglied angeordneten Signalgeber aufweisen. Beispielsweise kann es sich beim Positionssensor um einen Hall-Sensor handeln, während es sich beim Signalgeber dann zweckmäßig um einen Dauermagneten handelt. Grundsätzlich sind jedoch auch andere Systeme von Positionssensor und Signalgeber denkbar. Eine Hubverstellung des Ventilglieds zum Öffnen des Bypasspfads führt somit unmittelbar zu einer Relativverstellung zwischen Signalgeber und Positionssensor, die vom Positionssensor einfach detektiert werden kann. Somit besitzt die hier vorgeschlagene Positionssensorik eine hohe Zuverlässigkeit.

Bei einer anderen vorteilhaften Ausführungsform kann eine Drucksensorik zum Erzeugen eines Drucksignals in Abhängigkeit des Drucks im Rohraum oder im Reinraum oder sowohl im Rohraum als auch im Reinraum vorgesehen sein. Beispielsweise soll ein übermäßiger Druckanstieg im Kurbelgehäuse vermieden werden. Insbesondere soll im Kurbelgehäuse permanent ein geringfügiger Unterdruck gegenüber atmosphärischem Umgebungsdruck gewährleistet werden. Kommt es aus irgendwelchen Gründen zu einem unzulässigen Druckanstieg im Kurbelgehäuse, steigt damit automatisch auch der Druck im Rohraum. Alternativ kann die Drucksensorik auch den Strömungswiderstand des Filterelements und somit den Beladungszustand des Filterelements überwachen, indem die Drucksensorik die Druckdifferenz zwischen Rohraum und Reinraum überwacht. Jedenfalls kann auch das Drucksignal dazu genutzt werden, ein Warnsignal bzw. ein Wartungssignal zu generieren.

Die Drucksensorik kann beispielsweise einen Differenzdrucksensor aufweisen, der einen ersten Druckmessanschluss und einen zweiten Druckmessanschluss aufweist. Der erste Druckmessanschluss kann beispielsweise an den Einlassanschluss angeschlossen sein, so dass der erste Druckmessanschluss den Druck im Einlass und somit den Druck im Rohraum misst. Der zweite Druckmessanschluss kann an einen mit dem Auslassanschluss fluidisch verbundenen Bereich eines Innenraums des Gehäuses angeschlossen sein, so dass über den zweiten Druckmessanschluss der Druck im Reinraum gemessen werden kann. Die beiden Druckmessanschlüsse können dann auf geeignete Weise mit zwei Seiten eines Differenzdruckmesselements verbunden sein, das beispielsweise eine dehnbare Membran besitzt, die eine Dehnmessschaltung mit mehreren Dehnmesselementen, zum Beispiel in Form einer Brückenschaltung, aufweist.

Die Drucksensorik kann hierzu ein Sensorgehäuse aufweisen, von dem die beiden Druckmessanschlüsse ausgehen, wodurch die Drucksensorik einen besonders kompakten Aufbau besitzt. Alternativ ist ebenso denkbar, dass die Drucksensorik zumindest einen Absolutdrucksensor umfasst, der den Druck im Rohraum oder im Reinraum misst.

Bei einer anderen vorteilhaften Ausführungsform kann das Filterelement als Ringfilterelement ausgestaltet sein. Das Ringfilterelement weist einen ringförmigen Filterkörper und an jeder axialen Stirnseite des Filterkörpers jeweils eine Endscheibe auf. Die beiden Endscheiben sind dabei als offene Endscheiben konzipiert, so dass sie jeweils eine zentrale Öffnung besitzen. Ein vom Filterkörper umschlossener Innenraum des Filterelements bildet den Rohraum im Gehäuse. Die eine Endscheibe ist dem Einlassanschluss zugeordnet, so dass im Betrieb das zu reinigende Blow-by-Gas durch den Einlassanschluss und durch die Öffnung dieser einen Endscheibe in den Innenraum des Filterelements gelangt. Die andere Endscheibe ist dagegen dem Bypassventil zugeordnet. Mit anderen Worten, an der anderen Endscheibe ist der Ventilsitz ausgebildet. Somit kann bei einem entsprechenden Überdruck im Rohraum der Bypassstrom durch die zentrale Öffnung dieser anderen Endscheibe aus dem Innenraum des Filterelements austreten und direkt in den Rohraum des Gehäuses gelangen.

Bei einer zweckmäßigen Weiterbildung kann die dem Bypassventil zugeordnete Endscheibe einen axial nach außen abstehenden, die zentrale Öffnung einfassenden Ringkragen aufweisen, der an seiner außenliegenden axialen Stirnseite den Ventilsitz aufweist bzw. bildet. Dieser Ringkragen kann als Stutzen ausgeformt sein. Insbesondere ist es hierdurch möglich, die beiden Endscheiben baugleich, also als Gleichteile zu konzipieren. Dabei kann der Stutzen der einen Endscheibe in eine im Gehäuse angeordnete, den Einlassanschluss umgebende Stutzenaufnahme eingesteckt werden, während der Stutzen der anderen Endscheibe den Ventilsitz für das Bypassventil bildet. Durch die Ausgestaltung der Endscheiben als Gleichteile reduzieren sich die Herstellungskosten für das Filterelement.

Entsprechend einer anderen vorteilhaften Ausführungsform kann eine Fördereinrichtung zum Antreiben des Blow-by-Gases vorgesehen sein. Diese Ausführungsform beruht auf einer grundlegenden Idee, die auch für sich genommen beansprucht werden kann, und zwar insbesondere unabhängig von der vorstehend vorgeschlagenen Ausgestaltung des Bypassventils, mit oder ohne zugehörigen Impaktor, und auch unabhängig von der vorstehend vorgeschlagenen Ausgestaltung des Filterelements. Insbesondere benötigt diese unabhängige Lösung der Kurbelgehäuseentlüftungsvorrichtung nur ein Gehäuse mit einer darin angeordneten Reinigungseinrichtung, mit deren Hilfe Öltröpfchen aus der Blow-by-Gasströmung entfernt werden können. Diese Reinigungseinrichtung kann ein Trägheitsabscheider, wie zum Beispiel ein Impaktor oder eine Zentrifuge oder ein Zyklon, oder ein Filterelement sein. Ebenso ist eine Kombination der Fördereinrichtung mit den vorstehend genannten Merkmalen sowie den vorstehend genannten Ausführungsformen möglich.

Das Bereitstellen einer derartigen Fördereinrichtung beruht auf dem allgemeinen Gedanken, mit Hilfe der Fördereinrichtung eine Druckdifferenz zwischen Rohraum und Reinraum in quasi beliebiger Höhe erzeugen zu können. Dies führt dazu, dass auch Reinigungseinrichtungen mit quasi beliebiger Reinigungswirkung verwendet werden können. Bei herkömmlichen Reinigungseinrichtungen geht eine zunehmende Effizienz mit einem Anstieg des Durchströmungswiderstands einher. Beispielsweise besitzen Filterelemente, die für Verunreinigungen im Nanometerbereich undurchlässig sind, einen wesentlich größeren Durchströmungswiderstand als Filterelemente, die nur für Partikel im Mikrometerbereich undurchlässig sind. Die Verwendung einer Fördereinrichtung ermöglicht es daher, Reinigungseinrichtungen, insbesondere Filterelemente, mit besonders hoher Reinigungswirkung zu verwenden, deren Durchströmungswiderstand für das ohne eine derartige Fördereinrichtung zur Verfügung stehende Druckgefälle zwischen Kurbelgehäuse und Frischluftanlage zu hoch ist. Zusätzlich oder alternativ ermöglicht die Fördereinrichtung bei der Verwendung eines konventionellen Filterelements auch dann einen ausreichenden Volumenstrom, wenn das Filterelement bereits teilweise zugesetzt ist und einen erhöhten Durchströmungswiderstand besitzt. Mit Hilfe einer derartigen Fördereinrichtung lässt sich somit der Filtrationsbetrieb auch dann aufrechterhalten, wenn das "normale" Druckgefälle zwischen Kurbelgehäuse und Frischluftanlage nicht mehr ausreicht, den Durchströmungswiderstand des Filterelements zu überwinden. Insbesondere kann bei einer derartigen Ausführungsform dann auch auf das Bypassventil verzichtet werden, da mit Hilfe der Fördereinrichtung trotz des unerwünschten Druckanstiegs (relativ gesehen) im Rohraum ein ausreichender Blow-by-Gasstrom gewährleistet werden kann.

Die Fördereinrichtung kann z.B. als Gebläse ausgeführt sein. Hierbei sind diverse Ausgestaltungsmöglichkeiten, wie z.B. als einstufiger Radiallüfter, denkbar. Alternativ kann die Fördereinrichtung auch durch eine entsprechende Kopplung mit einer im Fahrzeug bereits vorhandenen Druck- bzw. Unterdruckquelle verbunden sein, um den erforderlichen Förderdruck bereitzustellen.

Besonders zweckmäßig ist eine Weiterbildung, bei welcher eine mit der vorstehend genannten Drucksensorik gekoppelte Steuerung zum Ansteuern der Fördereinrichtung in Abhängigkeit des Drucksignals vorgesehen ist. Mit anderen Worten, die Fördereinrichtung lässt sich in diesem Fall bedarfsabhängig zuschalten und/oder bedarfsabhängig betreiben. Das Ansteuern der Fördereinrichtung umfasst dabei zum einen das Einschalten und das Ausschalten der Fördereinrichtung. Zum anderen kann das Ansteuern der Fördereinrichtung insbesondere auch das Erzeugen variierender Druckdifferenzen umfassen, beispielsweise um stets den gewünschten bzw. erforderlichen Volumenstrom generieren zu können, wobei dieser Volumenstrom vom aktuellen Betriebszustand der Brennkraftmaschine abhängen kann.

Entsprechend einer anderen vorteilhaften Weiterbildung kann die Fördereinrichtung außerhalb des Gehäuses angeordnet sein. Hierdurch lässt sich gegebenenfalls vorhandener Bauraum besser ausnutzen. Grundsätzlich kann bei entsprechender Gestaltung des Gehäuses die Fördereinrichtung auch innerhalb des Gehäuses untergebracht werden.

Die Fördereinrichtung kann mit dem Einlassanschluss oder mit dem Auslassanschluss verbunden sein. Bevorzugt ist dabei eine ausgangsseitige Anordnung, so dass eine Saugseite der Fördereinrichtung mit dem Ausgangsanschluss fluidisch verbunden ist. Auf diese Weise lässt sich der Druck im Rohraum besser als Zielgröße der Steuerung bzw. Regelung nutzen.

Zusätzlich oder alternativ kann stromauf oder stromab der Fördereinrichtung ein Druckbegrenzungsventil bzw. ein Druckregelventil angeordnet sein, das so ausgelegt bzw. so geschaltet ist, dass sich der Druck im Rohraum bzw. der Druck im Kurbelgehäuse stets in einem vorgegebenen Druckfenster bzw. in einem vorgegebenen Druckbereich befindet, so dass einerseits ein übermäßiger Druckanstieg im Kurbelgehäuse und andererseits ein übermäßiger Druckabfall im Kurbelgehäuse vermieden werden können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: ein isometrischer Längsmittelschnitt einer Kurbelgehäuseentlüftungsvorrichtung,
- Fig. 2: eine vergrößerte Ansicht eines Details II aus Fig. 1,
- Fig. 3: eine andere Ansicht eines Details III aus Fig. 1 bei einer anderen Ausführungsform,
- Fig. 4: eine Ansicht wie in Fig. 1, jedoch bei einer anderen Kurbelgehäuseentlüftungsvorrichtung.

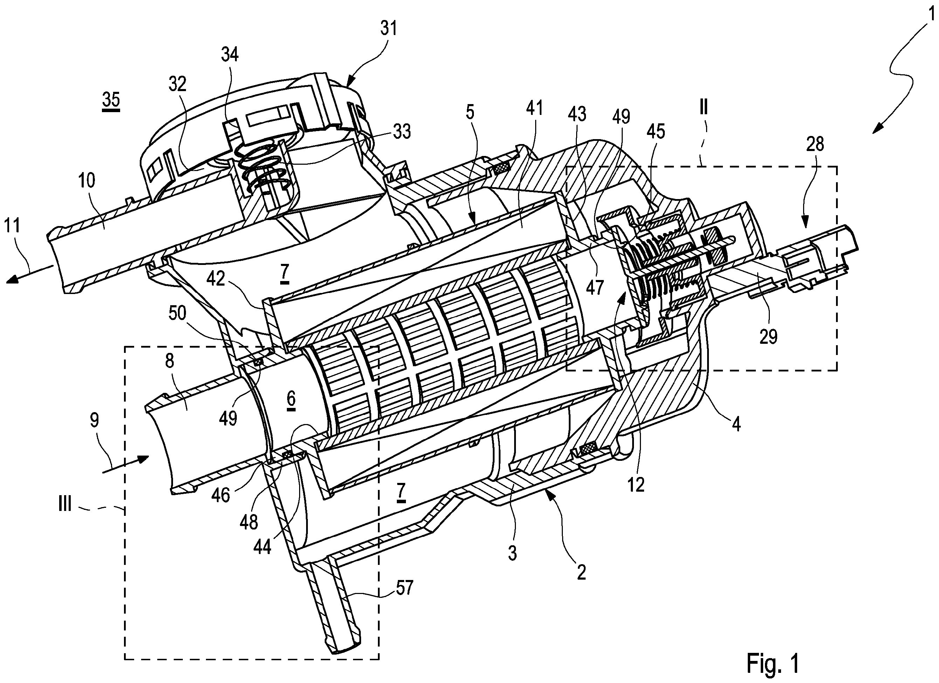

Entsprechend den Figuren 1-4 umfasst eine Kurbelgehäuseentlüftungsvorrichtung 1, die bei einer Brennkraftmaschine, vorzugsweise eines Kraftfahrzeugs, zur Anwendung kommt, ein Gehäuse 2. Das Gehäuse 2 umfasst dabei einen Behälter 3 und einen Deckel 4, mit dem eine Behälteröffnung verschlossen werden kann.

Die Kurbelgehäuseentlüftungsvorrichtung 1, die im Folgenden auch kurz mit Vorrichtung 1 bezeichnet wird, umfasst ferner eine Reinigungseinrichtung 5 zum Reinigen von Blow-by-Gas, die bei den hier gezeigten Ausführungsformen als Filterelement ausgestaltet ist, so dass im Folgenden auch das Filterelement mit dem Bezugszeichen 5 bezeichnet wird. Das Filterelement 5 ist im Gehäuse 2 angeordnet und trennt im Gehäuse 2 einen Rohraum 6 von einem Reinraum 7. Zum Montieren und Demontieren des Filterelements 5 wird der Deckel 4 vom Behälter 3 entfernt. Das Gehäuse 2 besitzt einen Einlassanschluss 8, über den zu reinigendes und durch einen Pfeil 9 angedeutetes Blow-by-Gas zugeführt werden kann, sowie einen Auslassanschluss 10, über den gereinigtes Blow-by-Gas vom Gehäuse 2 abgeführt werden kann, was durch einen Pfeil 11 angedeutet ist. Der Einlassanschluss 8 ist mit dem Rohraum 6 fluidisch verbunden. Der Auslassanschluss 10 ist mit dem Reinraum 7 fluidisch verbunden.

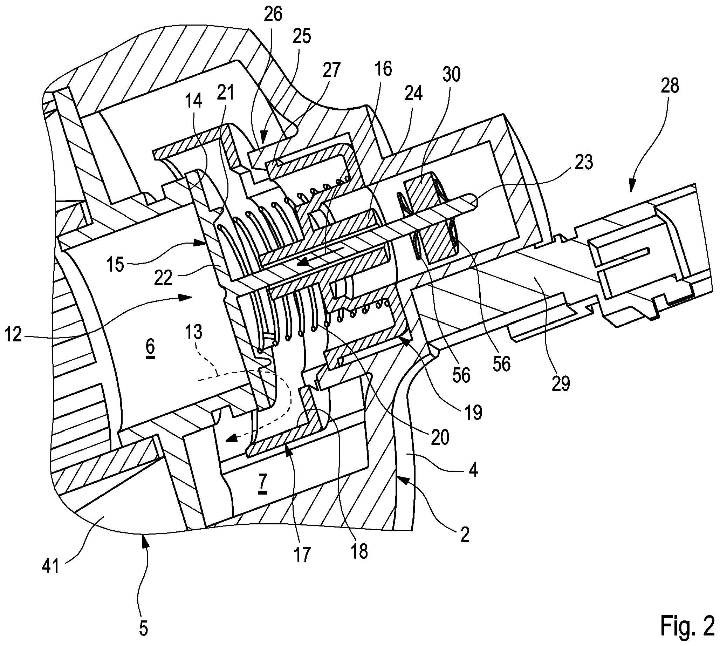

Gemäß den Figuren 1 und 2 besitzt die Vorrichtung 1 ein Bypassventil 12, das im Folgenden mit Bezug auf Figur 2 näher erläutert wird. Das Bypassventil 12 ist im Gehäuse 2 angeordnet und steuert einen mit unterbrochener Linie angedeuteten Bypasspfad 13, der den Rohraum 6 fluidisch mit dem Reinraum 7 verbindet. Das Bypassventil 12 weist einen Ventilsitz 14 und ein Ventilglied 15 auf, das mit dem Ventilsitz 14 zum Schließen des Bypasspfads 13 zusammenwirkt. Das Ventilglied 15 ist mittels einer durch einen Pfeil angedeuteten Federkraft 16 gegen den Ventilsitz 14 vorgespannt. Sobald eine Druckdifferenz zwischen Rohraum 6 und Reinraum 7, die einen vorbestimmten rohseitigen Überdruck übersteigt, kann das Ventilglied 15 entgegen der Federkraft 16 vom Ventilsitz 14 abheben und so den Bypasspfad 13 öffnen.

Im Bypasspfad 13 ist im Gehäuse 2 außerdem ein Impaktor 17 angeordnet, der eine Prallwand 18 aufweist, die im Bypasspfad 13 so positioniert ist, dass sie bei geöffnetem Bypasspfad 13 von einem rohseitigen Blow-by-Gasstrom angeströmt ist. Hierdurch kann eine effiziente Reinigungswirkung realisiert werden, selbst wenn der Blow-by-Gasstrom bei geöffnetem Bypassventil 12 das Filterelement 5 umgeht.

Gemäß der in den Figuren 1 und 2 gezeigten Ausführungsform ist der Ventilsitz 14 unmittelbar am Filterelement 5 ausgebildet, während das Ventilglied 15 am Gehäuse 2 relativ zum Ventilsitz 14 hubverstellbar angeordnet ist. Zweckmäßig ist hierzu ein Ventilgliedhalter 19 vorgesehen, der bezüglich des Gehäuses 2 ein separates Bauteil ist und der am Gehäuse 2, hier am Deckel 4 befestigt ist. An diesem Ventilgliedhalter 19 ist das Ventilglied 15 relativ zum Ventilsitz 14 hubverstellbar angeordnet. Zum Erzeugen der Federkraft 16 ist eine Vorspannfeder 20 vorgesehen, die sich an einer vom Ventilsitz 14 abgewandten Seite des Ventilglieds 15 am Ventilglied 15 und am Ventilgliedhalter 19 abstützt. Zur Positionierung der Vorspannfeder 20 kann das Ventilglied 15 Vorsprünge 21 aufweisen.

Die Prallwand 18 ist hier unmittelbar am Ventilgliedhalter 19 ausgebildet und dadurch mittelbar am Gehäuse 2 bzw. am Deckel 4 angeordnet. Die Prallwand 18 ist ringförmig bzw. zylindrisch ausgestaltet, wobei die Prallwand 18 das Ventilglied 15 im Bereich des Ventilsitzes 14 koaxial zum Ventilsitz 14 umschließt. Sofern der Impaktor 17 nur die Prallwand 18 umfasst, bildet die Prallwand 18 den Impaktor 17. Zweckmäßig kann der Impaktor 17 jedoch außerdem eine hier nicht gezeigte Adsorptionsschicht aufweisen, die an der Prallwand 18 angeordnet ist, und zwar auf einer dem Ventilsitz 14 zugewandten Seite. Die Adsorptionsschicht, beispielsweise ein Vliesmaterial, kann die sich durch die Impaktorwirkung niederschlagenden Tröpfchen aufsaugen und gezielt einem Abtropfbereich zuführen.

Das Gehäuse 2 besitzt außerdem einen Ölrücklaufanschluss 57, an den eine Ölrücklaufleitung anschließbar ist, um das am Filterelement 5 bzw. am Impaktor 17 abgeschiedene Öl einem Reservoir, vorzugsweise einer Ölwanne der Brennkraftmaschine, zurückzuführen.

Das Ventilglied 15 ist hier als Tellerventil ausgestaltet und besitzt dementsprechend einen Ventilteller 22 und einen Ventilschaft 23. Der Ventilschaft 23 ist in einer Führung 24, die durch eine Hülse gebildet ist, axial geführt, um die ordnungsgemäße Funktion des Bypassventils 12 zu verbessern. Im Beispiel ist die Führung 24 des Bypassventils 12 am Ventilgliedhalter 19 ausgebildet. Der Ventilgliedhalter 19 ist im Beispiel der Figuren 1 und 2 mit dem Gehäuse 2 bzw. mit dem Deckel 4 verclipst. Entsprechende Verrastungen 25 umfassen beispielsweise gehäuseseitige bzw. deckelseitige Rastarme 26, die mit halterseitigen Rastvorsprüngen 27 zusammenwirken.

Bei der in den Figuren 1 und 2 gezeigten Ausführungsform ist die Vorrichtung 1 außerdem mit einer Positionssensorik 28 ausgestattet, mit deren Hilfe ein Positionssignal generiert werden kann, das von der jeweiligen Ventilstellung abhängt. Dabei kann im einfachsten Fall überwacht werden, ob sich das Ventilglied 15 in seiner Schließstellung befindet oder ob sich das Ventilglied 12 in seiner Offenstellung befindet. Grundsätzlich kann die Positionssensorik 28 jedoch auch so ausgestaltet sein, dass auch wenigstens eine Zwischenstellung bzw. der jeweilige Öffnungsgrad des Bypassventils 12 erfasst werden kann. Die Positionssensorik 28 ist zweckmäßig mit einer Auswerteeinrichtung gekoppelt, die dann abhängig vom Positionssignal ein Warn- und/oder Wartungssignal generieren kann. Grundsätzlich ist die Vorrichtung 1 auch ohne die Positionssensorik 28 funktionsfähig, so dass diese bei kostengünstigeren Ausführungen (nicht dargestellt) auch entbehrlich ist.

Im Beispiel der Figuren 1 und 2 ist die Positionssensorik 28 mit Hilfe eines Positionssensors 29 in Verbindung mit einem Signalgeber 30 realisiert. Der Positionssensor 29 ist außen am Gehäuse 2 bzw. am Deckel 4 ortsfest angeordnet. Der Signalgeber 30 ist innen im Gehäuse 2 bzw. innen im Deckel 4 ortsfest am Ventilglied 15, hier am Ventilschaft 23 angeordnet. Beispielsweise handelt es sich beim Signalgeber 30 um einen Dauermagneten. Zweckmäßig handelt es sich beim Positionssensor 29 um einen Hall-Sensor. Das Gehäuse 2 ist zumindest im Bereich des Deckels 4 vorzugsweise aus einem Kunststoff hergestellt, so dass der Signalgeber 30 durch den Werkstoff des Deckels 4 hindurch mit dem Positionssensor 29 zusammenwirken kann.

Der Signalgeber 30 ist hier mit Hilfe von zwei Klemmscheiben 56 axial am Ventilschaft 23 fixiert. Die dem Ventilteller 22 zugewandte Klemmscheibe 56 begrenzt den Hub des Ventilglieds 15 bei fehlendem Filterelement 5 und ermöglicht die Gestaltung des Bypassventils 12 als vormontierbare Baugruppe, die außerhalb des Gehäuses 2 montierbar ist und im montierten Zustand in das Gehäuse 2 bzw. in den Deckel 4 eingesetzt werden kann.

Die in Figur 1 gezeigte Ausführungsform der Vorrichtung 1 ist außerdem mit einem Druckregelventil 31 ausgestattet, das die fluidische Verbindung zwischen dem Auslassanschluss 10 und der Reinseite 7 steuert. Im Einzelnen umfasst das Druckregelventil 31 eine Membran 32 und eine Öffnungsdruckfeder 33. Die Membran 32 steuert eine Verbindungsöffnung 34, die den Auslassanschluss 10 mit dem Reinraum 7 fluidisch verbindet. Die Membran 32 ist hierbei einerseits dem Druck einer Umgebung 35 und andererseits dem Druck des Reinraums 7 ausgesetzt. Ferner ist die Membran 32 auf ihrer dem Reinraum 7 zugewandten Seite dem Druck der Öffnungsdruckfeder 33 ausgesetzt. Eine genauere Funktionsbeschreibung des Druckregelventils 31 findet sich beispielsweise in der DE 103 05 172 A1, deren Inhalt hiermit durch Bezugnahme dem Offenbarungsgehalt der vorliegenden Unterlagen hinzugefügt wird. Bei kostengünstigeren Ausführungen der Vorrichtung 1 (nicht dargestellt) kann auf das Druckregelventil 31 verzichtet werden.

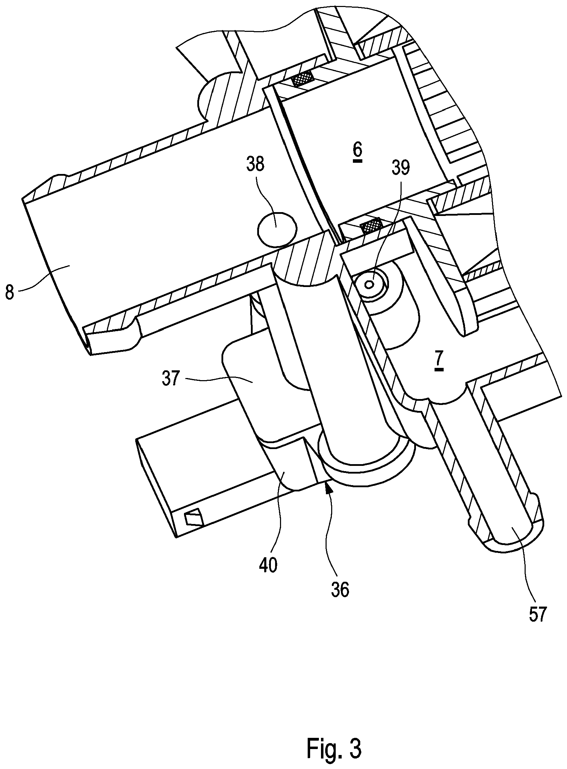

Gemäß Figur 3 kann die Vorrichtung 1 außerdem mit einer Drucksensorik 36 ausgestattet sein, mit deren Hilfe ein Drucksignal erzeugt werden kann, das vom Druck im Rohraum 6 bzw. vom Druck im Reinraum 7 abhängt. Beispielsweise kann die Drucksensorik 36 zumindest einen Absolutdrucksensor umfassen, um den Druck im Rohraum 6 bzw. um den Druck im Reinraum 7 zu erfassen. Bevorzugt ist jedoch die hier gezeigte Ausführungsform, bei welcher die Drucksensorik 36 einen Differenzdrucksensor 37 umfasst, der einen ersten Druckmessanschluss 38 und einen zweiten Druckmessanschluss 39 aufweist. Der erste Druckmessanschluss 38 ist an den Einlassanschluss 8 angeschlossen und eignet sich daher zur Detektion des Drucks im Rohraum 6. Der zweite Druckmessanschluss 39 ist an einen Bereich eines Innenraums des Gehäuses 2 angeschlossen, der mit dem Auslassanschluss 10 fluidisch verbunden ist. Zweckmäßig ist der zweite Druckmessanschluss 39 direkt an den Reinraum 7 angeschlossen. Die Drucksensorik 36 umfasst ferner ein Sensorgehäuse 40, das den Differenzdrucksensor 37 enthält und von dem die beiden Druckmessanschlüsse 38, 39 ausgehen.

Das mit Hilfe der Drucksensorik 36 generierte Drucksignal kann dazu verwendet werden, ein Warn-/Wartungssignal zu generieren, beispielsweise um einen Wartungsbedarf der Vorrichtung 1 anzuzeigen. Bei kostengünstigeren Ausgestaltungen der Vorrichtung 1 kann auf die Drucksensorik 36 verzichtet werden.

Weiterhin sei darauf hingewiesen, dass eine beliebige, hier nicht dargestellte Kombination der vorstehend genannten optionalen Zusatzeinrichtungen, Positionssensorik 28, Druckregelventil 31 und Drucksensorik 36 erfolgen kann.

Bei den hier gezeigten Ausführungsformen ist das Filterelement 5 ein Ringfilterelement, das gemäß der Figuren 1-4 einen ringförmigen Filterkörper 41 aus einem Filtermaterial sowie zwei Endscheiben 42, 43 aufweist, die an den beiden axialen Stirnseiten des Filterkörpers 41 angeordnet sind. Das Filtermaterial des Filterkörpers 41 ist zweckmäßig ein Bahnenmaterial und kann sternförmig gefaltet sein. Die Endscheiben 42, 43 verschließen das Filtermaterial axial bzw. stirnseitig. Die beiden Endscheiben 42, 43 besitzen jeweils eine zentrale Öffnung 44 bzw. 45. Ein vom Filterkörper 41 umschlossener Innenraum bildet den Rohraum 6. Die eine oder erste Endscheibe 42 ist dem Einlassanschluss 8 zugeordnet. Die andere oder zweite Endscheibe 43 ist dem Bypassventil 12 zugeordnet. Die beiden Endscheiben 42, 43 sind bei einer bevorzugten Ausführungsform des Filterelements 5 als Gleichteile ausgestaltet. Die Endscheiben 42, 43 besitzen jeweils einen Ringkragen 46, 47, der axial nach außen absteht und die jeweilige zentrale Öffnung 44, 45 einfasst. Die außenliegenden axialen Stirnseiten der beiden Ringkragen 46, 47 bilden jeweils einen Ventilsitz 14, wobei nur die axiale Stirnseite des Ringkragens 47 der zweiten Endscheibe 43, die dem Bypassventil 12 zugeordnet ist, auch als Ventilsitz 14 verwendet wird. Am Behälter 3 des Gehäuses 2 ist eine Stutzenaufnahme 48 ausgebildet, die den Einlassanschluss 8 umschließt und die zur Aufnahme des Ringkragens 46 der ersten Endscheibe 42 dient, der hierzu als Stutzen verwendet wird. Der jeweilige Ringkragen 46, 47 besitzt eine Dichtungsaufnahme 49 in Form einer umlaufenden Ringnut, wobei nur bei der ersten Endscheibe 42 eine entsprechende Ringdichtung 50 in die zugehörige Dichtungsaufnahme 49 eingesetzt ist, um den Stutzen (Ringkragen 46) gegenüber der Stutzenaufnahme 49 abzudichten.

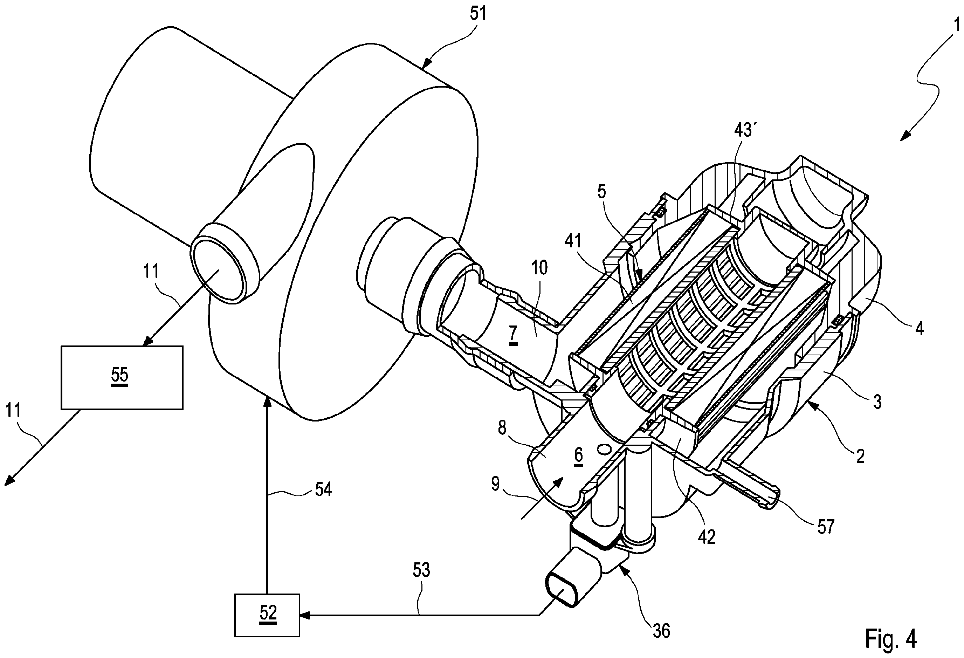

Figur 4 zeigt nun eine andere Kurbelgehäuseentlüftungsvorrichtung 1, die grundsätzlich ohne das Bypassventil 12 und ohne den Impaktor 17 auskommt. Die Vorrichtung 1 ist mit einer Fördereinrichtung 51 ausgestattet, mit deren Hilfe das Blow-by-Gas 9, 11 angetrieben werden kann. Beispielsweise handelt es sich bei der Fördereinrichtung 51 um ein Gebläse, insbesondere Radialgebläse. Ferner ist eine Steuerung 52 vorgesehen, die eingangsseitig über eine Signalleitung 53 mit der vorstehend genannten Drucksensorik 36 gekoppelt ist und die ausgangsseitig über eine Steuerleitung 54 mit der Fördereinrichtung 51 gekoppelt ist. Die Steuerung 52 kann nun die Fördereinrichtung 51 in Abhängigkeit des Drucksignals ansteuern. Beispielsweise kann das Drucksignal die Information beinhalten, dass der Druck im Rohraum 6 und somit im Kurbelgehäuse einen unzulässig hohen Wert erreicht. In der Folge kann die Steuereinrichtung 52 das Gebläse 51 gezielt so ansteuern, dass der Druck rohseitig wieder einen zulässigen Bereich erreicht.

Die Fördereinrichtung 51 ist bevorzugt außerhalb des Gehäuses 2 angeordnet. Im Beispiel ist die Fördereinrichtung 51 mit dem Auslassanschluss 10 fluidisch verbunden. Dementsprechend ist die Fördereinrichtung 51 hier in einem Rücklauf der Vorrichtung 1 angeordnet, der vom Auslassanschluss 10 bis zu einer Frischluftanlage der Brennkraftmaschine führt. Ferner ist ein Ventil 55 vorgesehen, das hier ebenfalls im Rücklauf angeordnet ist, und zwar stromab der Fördereinrichtung 51. Das Ventil 55 kann als Druckbegrenzungsventil oder als Druckregelventil ausgestaltet sein. Das Ventil 55 kann dabei grundsätzlich einen ähnlichen Aufbau besitzen wie das mit Bezug auf Figur 1 erläuterte Druckregelventil 31, das unmittelbar am Gehäuse 2 angeordnet ist.

Die in Figur 4 gezeigte Ausführungsform unterscheidet sich von der in Figur 1 gezeigten Ausführungsform auch dadurch, dass die zweite Endscheibe 43' unterschiedlich zur ersten Endscheibe 42 gestaltet ist. Insbesondere ist die zweite Endscheibe 43' hier zentral verschlossen, also als geschlossene Endscheibe ausgestaltet. Bei der in Figur 4 gezeigten Ausführungsform ist die Reinigungseinrichtung 5 ebenso wie bei den Varianten der Figuren 1-3 als Filterelement ausgestaltet. Bei der in Figur 4 gezeigten Ausführungsform kann die Reinigungseinrichtung 5 jedoch auch anderer Bauart sein. Insbesondere kommt auch ein Trägheitsabscheider in Frage, beispielsweise ein Impaktor oder ein Zyklon oder eine Zentrifuge, insbesondere eine Tellerzentrifuge.

Eine Fördereinrichtung 51, wie sie bei der in Figur 4 gezeigten Ausführungsform der Vorrichtung 1 vorgesehen ist, kann grundsätzlich auch bei der in Figur 1 gezeigten und beschriebenen Ausführungsform vorgesehen sein kann, also in Kombination mit dem Bypassventil 12 und dem Impaktor 17.

## Patentansprüche

1. Kurbelgehäuseentlüftungsvorrichtung für eine Brennkraftmaschine, insbesondere eines Kraftfahrzeugs,
- mit einem Gehäuse (2), das einen Einlassanschluss (8) zum Zuführen von zu reinigendem Blow-by-Gas (9) und einen Auslassanschluss (10) zum Abführen von gereinigtem Blow-by-Gas (11) aufweist,
- mit einem Filterelement (5), das im Gehäuse (2) angeordnet ist und das im Gehäuse (2) einen mit dem Einlassanschluss (8) fluidisch verbundenen Rohraum (6) von einem mit dem Auslassanschluss (10) fluidisch verbundenen Reinraum (7) trennt,
- mit einem Bypassventil (12) das im Gehäuse (2) angeordnet ist, das einen im Gehäuse (2) verlaufenden, den Rohraum (6) mit dem Reinraum (7) fluidisch verbindenden Bypasspfad (13) steuert und das einen Ventilsitz (14) sowie ein mittels Federkraft (16) gegen den Ventilsitz (14) vorgespanntes Ventilglied (15) aufweist, das ab einem vorbestimmten rohseitigen Überdruck entgegen der Federkraft (16) vom Ventilsitz (14) abhebt und den Bypasspfad (13) öffnet,
- mit einem Impaktor (17), der im Gehäuse (2) im Bypasspfad (13) so angeordnet ist, dass eine Prallwand (18) des Impaktors (17) nur bei geöffnetem Bypasspfad (13) von einem rohseitigen Blow-by-Gasstrom angeströmt ist,
- wobei der Ventilsitz (14) unmittelbar am Filterelement (5) ausgebildet ist,
- wobei das Ventilglied (15) am Gehäuse (2) relativ zum Ventilsitz (14) hubverstellbar angeordnet ist,
**dadurch gekennzeichnet,**
- **dass** am Gehäuse (2) ein Ventilgliedhalter (19) befestigt ist, an dem das Ventilglied (15) relativ zum Ventilsitz (14) hubverstellbar angeordnet ist,
- **dass** die Prallwand (18) am Ventilgliedhalter (19) ausgebildet ist.

2. Vorrichtung nach Anspruch 1,
**dadurch gekennzeichnet,**
**dass** die Prallwand (18) ringförmig ausgestaltet ist und das Ventilglied (15) im Bereich des Ventilsitzes (14) koaxial zum Ventilsitz (14) umschließt.

3. Vorrichtung nach e Anspruch 1 oder 2,
**dadurch gekennzeichnet,**
- **dass** das Ventilglied (15) als Tellerventil ausgestaltet ist, das einen Ventilteller (22) und einen Ventilschaft (23) aufweist,
- **dass** das Bypassventil (12) eine mit dem Ventilschaft (23) zusammenwirkende Führung (24) aufweist.

4. Vorrichtung nach Anspruch 3,
**dadurch gekennzeichnet,**
**dass** die Führung (24) am Ventilgliedhalter (19) ausgebildet ist.

5. Vorrichtung nach einem der Ansprüche 1 bis 4,
**gekennzeichnet durch** eine Positionssensorik (28) zum Erzeugen eines Positionssignals in Abhängigkeit der Ventilstellung.

6. Vorrichtung nach Anspruch 5,
**dadurch gekennzeichnet,**
**dass** die Positionssensorik (28) einen ortsfest am Gehäuse (2) angeordneten Positionssensor (29) und einen ortsfest am Ventilglied (15) angeordneten Signalgeber (30) aufweist.

7. Vorrichtung nach einem der Ansprüche 1 bis 6,
**gekennzeichnet durch** eine Drucksensorik (36) zum Erzeugen eines Drucksignals in Abhängigkeit des Drucks im Rohraum (6) und/oder im Reinraum (7).

8. Vorrichtung nach einem der Ansprüche 1 bis 7,
**dadurch gekennzeichnet,**
- **dass** das Filterelement (5) ein Ringfilterelement mit einem ringförmigen Filterkörper (41) und je einer Endscheibe (42, 43) an axialen Stirnseiten des Filterkörpers (41) ist,
- **dass** die beiden Endscheiben (42, 43) jeweils eine zentrale Öffnung (44, 45) aufweisen,
- **dass** ein vom Filterkörper (41) umschlossener Innenraum den Rohraum (6) bildet,
- **dass** die eine Endscheibe (42) dem Einlassanschluss (8) zugeordnet ist,
- **dass** die andere Endscheibe (43) dem Bypassventil (12) zugeordnet ist.

9. Vorrichtung nach Anspruch 8,
**dadurch gekennzeichnet,**
**dass** die dem Bypassventil (12) zugeordnete Endscheibe (43) einen axial nach außen abstehenden, die zentrale Öffnung (45) einfassenden Ringkragen (47) aufweist, der an seiner außenliegenden axialen Stirnseite den Ventilsitz (14) aufweist.

10. Vorrichtung nach einem der Ansprüche 1 bis 9,
**gekennzeichnet durch** eine Fördereinrichtung (51) zum Antreiben des Blow-by-Gases (9, 11)

11. Vorrichtung nach den Ansprüchen 7 und 10,
**gekennzeichnet durch** eine mit der Drucksensorik (36) gekoppelte Steuerung (52) zum Ansteuern der Fördereinrichtung (51) in Abhängigkeit des Drucksignals.

12. Vorrichtung nach Anspruch 10 oder 11,
**dadurch gekennzeichnet,**
**dass** die Fördereinrichtung (51) außerhalb des Gehäuses (2) angeordnet ist.

13. Vorrichtung nach einem der Ansprüche 10 bis 12,
**dadurch gekennzeichnet,**
**dass** die Fördereinrichtung (51) mit dem Einlassanschluss (8) oder mit dem Auslassanschluss (10) fluidisch verbunden ist.

14. Vorrichtung nach einem der Ansprüche 10 bis 13,
**dadurch gekennzeichnet,**
**dass** stromab oder stromauf der Fördereinrichtung (51) ein Ventil (55), insbesondere ein Druckbegrenzungsventil oder ein Druckregelventil, angeordnet ist.

## Claims

1. Crankcase ventilation device for an internal combustion engine, in particular of a motor vehicle,
- having a housing (2), which has an intake connector (8) for feeding the blow-by gas (9) to be cleaned and a discharge connector (10) to release the cleaned blow-by gas (11),
- having a filter element (5) which is arranged in the housing (2) and separates in the housing (2) a tube chamber (6) fluidically linked with the intake connector (8) from a cleaning chamber (7) fluidically linked with the discharge connector (10),
- having a bypass valve (12) arranged in the housing (2), which controls a bypass path (13) running in the housing (2) that fluidically connects the tube chamber (6) with the cleaning chamber (7) and has a valve seat (14) as well as a valve member (15) prestressed against the valve seat (14) by means of a spring force (16), which valve member at a preset overpressure on the untreated side against the spring force (16) lifts from the valve seat (14) and opens the bypass path (13),
- having an impactor (17), which is arranged in the housing (2) in the bypass path (13) so that an impact wall (18) of the impactor (17) is only impacted by a blow-by gas stream from the untreated side when the bypass path (13) is open,
- wherein the valve seat (14) is configured directly on the filter element (5),
- wherein the valve member (15) is arranged at the housing (2) relative to the valve seat (14) so that it can be adjustably lifted,
**characterized in that**,
- a valve member mount (19) is fastened at the housing (2) on which the valve member (15) is arranged relative to the valve seat (14) so that it can be adjustably lifted,
- the impact wall (18) is designed on the valve member mount (19).

2. Device according to claim 1,
**characterized in that**
the impact wall (18) is configured in a ring form and surrounds the valve member (15) in the region of the valve seat (14) coaxially to the valve seat (14).

3. Device according to claim 1 or 2,
**characterized in that**
- the valve member (15) is configured as a plate valve having a valve plate (22) and a valve shaft (23).
- the bypass valve (12) has a guide (24) interacting with the valve shaft (23).

4. Device according to claim 3,
**characterized in that**
the guide (24) is designed on the valve member mount (19).

5. Device according to one of claims 1 to 4,
**characterized by** a position sensor apparatus (28) for producing a position signal in response to the valve position.

6. Device according to claim 5,
**characterized in that**
the position sensor apparatus (28) has a position sensor (29) arranged at the housing (2) in a fixed position and a signal transmitter (30) arranged at the valve member (15) in a fixed position.

7. Device according to one of claims 1 to 6,
**characterized by** a pressure sensing apparatus (36) for producing a pressure signal in response to the pressure in the tube chamber (6) and/or the cleaning chamber (7).

8. Device according to one of claims 1 to 7,
**characterized in that**
- the filter element (5) is a ring filter element with a ring form filter body (41) and an end disk (42, 43) at each axial front side of the filter body (41),
- both end disks (42, 43) each have a central aperture (44,45),
- an inner chamber surrounded by the filter body (41) forms the tube chamber (6),
- one end disk (42) is arranged at the intake connector (8),
- the other end disk (43) is arranged at the bypass valve (12).

9. Device according to claim 8,
**characterized in that**
the end disk (43) arranged at the bypass valve (12) has a ring collar (47) bordering the central aperture (45) stretching axially outward, having the valve seat (14) at its outlying axial front side.

10. Device according to one of claims 1 to 9,
**characterized by** a conveying device (51) for moving the blow-by gas (9, 11).

11. Device according to claims 7 and 10,
**characterized by** a control device (52) coupled with the pressure sensing apparatus (36) for controlling the conveying device (51) in response to the pressure signal.

12. Device according to claim 10 or 11,
**characterized in that**
the conveying device (51) is arranged outside the housing (2).

13. Device according to one of claims 10 to 12,
**characterized in that**
the conveying device (51) is fluidically connected with the intake connector (8) or the discharge connector (10).

14. Device according to one of claims 10 to 13,
**characterized in that**
a valve (55) is arranged upstream or downstream of the conveying device (51), in particular a pressure limiting valve or a pressure regulating valve.

## Revendications

1. Dispositif de dégazage de carter de vilebrequin pour un moteur à combustion interne, en particulier d'un véhicule automobile,
- avec un carter (2), qui comporte un raccord d'entrée (8) destiné à amener du gaz de carter à purifier (9) et un raccord de sortie (10) destiné à évacuer du gaz de carter purifié (11),
- avec un élément de filtre (5) qui est agencé dans le carter (2) et qui sépare dans le carter (2) un espace de gaz brut (6), relié pour les fluides au raccord d'entrée (8), d'un espace de gaz purifié (7), relié pour les fluides au raccord de sortie (10),
- avec une soupape de dérivation (12), qui est agencée dans le carter (2), qui commande une voie de dérivation (13) s'étendant dans le carter (2) et reliant pour les fluides l'espace de gaz brut (6) à l'espace de gaz purifié (7) et qui comporte un siège de soupape (14) ainsi qu'un élément de soupape (15) précontraint contre le siège de soupape (14) au moyen d'une force de ressort (16), lequel élément de soupape se soulève du siège de soupape (14) à partir d'une surpression prédéterminée côté gaz brut contre la force de ressort (16) et ouvre la voie de dérivation (13),
- avec un percuteur (17), qui est agencé dans le carter (2) dans la voie de dérivation (13) de telle sorte qu'une chicane (18) du percuteur (17) n'est atteinte par un flux de gaz de carter côté gaz brut que lorsque la voie de dérivation (13) est ouverte,
- dans lequel le siège de soupape (14) est réalisé directement au niveau de l'élément de filtre (5),
- dans lequel l'élément de soupape (15) est agencé au niveau du carter (2) de manière à être réglable quant à sa course par rapport au siège de soupape (14), **caractérisé en ce que**
- un appui d'élément de soupape (19) est fixé au niveau du carter (2), appui au niveau duquel l'élément de soupape (15) est agencé de manière à être réglable quant à sa course par rapport au siège de soupape (14),
- la chicane (18) est réalisée au niveau de l'appui de l'élément de soupape (19).

2. Dispositif selon la revendication 1, **caractérisé en ce que** la chicane (18) est réalisée en forme d'anneau et entoure l'élément de soupape (15), de façon coaxiale par rapport au siège de soupape (14), dans la zone du siège de soupape (14).

3. Dispositif selon la revendication 1 ou 2, **caractérisé en ce que**
- l'élément de soupape (15) est réalisé comme une soupape en champignon qui comporte une tête de soupape (22) et une tige de soupape (23),
- la soupape de dérivation (12) comporte un guide (24) coopérant avec la tige de soupape (23).

4. Dispositif selon la revendication 3, **caractérisé en ce que** le guide (24) est réalisé au niveau de l'appui d'élément de soupape (19).

5. Dispositif selon l'une des revendications 1 à 4, **caractérisé par** un dispositif capteur de position (28) destiné à générer un signal de position en fonction de la position de soupape.

6. Dispositif selon la revendication 5, **caractérisé en ce que** le dispositif capteur de position (28) comporte un capteur de position (29) agencé de manière fixe au niveau du carter (2) et un générateur de signal (30) agencé de manière fixe au niveau de l'élément de soupape (15).

7. Dispositif selon l'une des revendications 1 à 6, **caractérisé par** un dispositif capteur de pression (36) destiné à générer un signal de pression en fonction de la pression dans l'espace de gaz brut (6) et/ou dans l'espace de gaz purifié (7).

8. Dispositif selon l'une des revendications 1 à 7, **caractérisé en ce que**
- l'élément de filtre (5) est un élément de filtre annulaire avec un corps de filtre (41) en forme d'anneau et à chaque fois un disque d'extrémité (42, 43) au niveau des côtés frontaux axiaux du corps de filtre (41),
- les deux disques d'extrémité (42, 43) comportent chacun une ouverture centrale (44,45),
- un espace intérieur entouré par le corps de filtre (41) forme l'espace de gaz brut (6),
- un disque d'extrémité (42) est associé au raccord d'entrée (8),
- l'autre disque d'extrémité (43) est associé à la soupape de dérivation (12).

9. Dispositif selon la revendication 8, **caractérisé en ce que** le disque d'extrémité (43) associé à la soupape de dérivation (12) comporte une collerette annulaire (47) qui dépasse de façon axiale vers l'extérieur et enchâsse l'ouverture centrale (45) et qui comporte le siège de soupape (14) au niveau de son côté frontal axial situé à l'extérieur.

10. Dispositif selon l'une des revendications 1 à 9, **caractérisé par** un dispositif de transport (51) pour entraîner le gaz de carter (9, 11).

11. Dispositif selon les revendications 7 et 10, **caractérisé par** une commande (52) couplée au dispositif capteur de pression (36) afin de commander le dispositif de transport (51) en fonction du signal de pression.

12. Dispositif selon la revendication 10 ou 11, **caractérisé en ce que** le dispositif de transport (51) est agencé à l'extérieur du carter (2).

13. Dispositif selon l'une des revendications 10 à 12, **caractérisé en ce que** le dispositif de transport (51) est relié pour les fluides au raccord d'entrée (8) ou au raccord de sortie (10).

14. Dispositif selon l'une des revendications 10 à 13, **caractérisé en ce qu'**une soupape (55), en particulier une soupape de limitation de pression ou une soupape de régulation de pression, est agencée en aval ou en amont du dispositif de transport (51).
